# EUROPÄISCHE PATENTANMELDUNG

(11) **EP 2 998 027 A1**
(43) Veröffentlichungstag der Anmeldung: **23.03.2016**
(21) Anmeldenummer: 15180892.0
(22) Anmeldetag: 13.08.2015
(51) Int. Cl.: B02C 4/02, B02C 4/42, B02C 13/20, B02C 13/30

(54) **WALZENBRECHER MIT SYNCHRONISIERTEM ANTRIEBSSTRANG**

(30) Priorität: 26.08.2014 DE 102014216963
(71) Anmelder: Takraf GmbH, 04347 Leipzig (DE)
(72) Erfinder: Götz, Bruno, 51674 Wiehl (DE); Stenzel, Thomas, 04934 Hohenleipisch (DE)
(74) Vertreter: Kailuweit & Uhlemann Patentanwälte Partnerschaft mbB

(57) **Zusammenfassung**

Der erfindungsgemäße Walzenbrecher weist mindestens zwei Brechwalzen und mindestens zwei Antriebsstränge zum Antrieb der Brechwalzen auf. Die Antriebsstränge haben jeweils mindestens ein Getriebe zur Reduktion der Motordrehzahl und entsprechender Steigerung des Drehmomentes. Erfindungsgemäß erfolgt die Synchronisierung auf der schneller laufenden Seite des Getriebes, also der Seite mit geringerem Drehmoment, so dass vorteilhaft deutlich geringere Drehmomente übertragen werden müssen. Somit kann die Ausführung der Synchronisierung deutlich kleiner und damit kostengünstiger ausfallen, da deutlich geringere Momente übertragen werden müssen.

Die Synchronisierung kann dabei verschiedenartig ausgeführt werden. Eine Möglichkeit besteht darin, die Eingangswellen der Getriebe bei entsprechender Anordnung einfach miteinander zu verbinden und damit zu synchronisieren. Voreilhaft kann die Synchronisation so für deutlich geringere Drehmomente ausgelegt werden und damit deutlich kleiner in den Abmessungen und kostengünstiger dimensioniert werden.

## Beschreibung

Die Erfindung bezieht sich auf einen Walzenbrecher aufweisend mindestens zwei Brechwalzen und mindestens zwei Antriebsstränge mit jeweils mindestens einem Getriebe.

Aus dem Stand der Technik sind verschiedene Walzenbrecher bekannt, die Erfindung betrifft Brecher mit mindestens zwei synchronisierten Brechwalzen. Für die Synchronisierung der Walzen sind verschiedene Möglichkeiten bekannt. Die Synchronisierung erfolgt dabei häufig auf der nicht angetriebenen Seite der Brechwalzen über Zahnräder. In anderen Ausführungen ist die Synchronisierung der Brechwalzen auf der Antriebsseite häufig über eine Synchronisationsstufe nach der Getriebeuntersetzung vor der Brechwalze realisiert. Nachteilig muss die Synchronisation aufgrund der hohen wirkenden Momenten entsprechend ausgelegt werden, mit negativen Auswirkungen auf Baugröße und Herstellungskosten.

Beispielsweise wird in der DE 10 2011 106 123 A1 ein Brecher vorgestellt, der zwei Antriebswellen aufweist, die auf der langsam laufenden Getriebeseite synchronisiert werden. Nachteilig ist eine mechanisch sehr stabile und damit kostenintensive Auslegung der Synchronisationsstufe notwendig.

Die Aufgabenstellung der vorliegenden Erfindung besteht darin, einen Walzenbrecher vorzuschlagen, der eine kostengünstig herzustellende und eine geringe Baugröße aufweisende Synchronisierung der Brechwalzen hat.

Diese Aufgabenstellung wird mittels eines Walzenbrechers mit den Merkmalen des Hauptanspruches gelöst. Bevorzugte Ausführungsformen der Erfindung sind Gegenstand von Unteransprüchen.

Der erfindungsgemäße Walzenbrecher weist mindestens zwei Brechwalzen und mindestens zwei Antriebsstränge zum Antrieb der Brechwalzen auf. Die Antriebsstränge haben jeweils mindestens ein Getriebe (bzw. ein Getriebe mit mehreren Getriebestufen) zur Reduktion der Motordrehzahl und entsprechender Steigerung des Drehmomentes. Erfindungsgemäß erfolgt die Synchronisierung auf der schneller laufenden Seite des Getriebes, also der Seite mit geringerem Drehmoment, so dass vorteilhaft deutlich geringere Drehmomente übertragen werden müssen. Mit anderen Worten erfolgt die Synchronisierung der Antriebsstränge auf der Eingangsseite des Getriebes bzw. motorseitig. Somit kann die Ausführung der Synchronisierung deutlich kleiner und damit kostengünstiger ausfallen, da deutlich geringere Momente übertragen werden müssen.

Die Synchronisierung kann dabei verschiedenartig ausgeführt werden. Eine Möglichkeit besteht darin, die Eingangswellen der Getriebe bei entsprechender Anordnung einfach miteinander zu verbinden und damit zu synchronisieren (beispielsweise mittels eines Zahnradpaares). Die Synchronisation kann so für deutlich geringere Drehmomente ausgelegt werden und damit deutlich kleiner in den Abmessungen und somit auch kostengünstiger dimensioniert werden.

Auch kann die Synchronisierung außerhalb der Getriebe vor der Drehzahlreduktion erfolgen. Hierzu sind verschiedenste Möglichkeiten denkbar, beispielsweise durch eine zusätzliche klein bauende Kegelradstufe an jedem Antriebsstrang die ebenfalls miteinander drehsteif gekoppelt werden. Möglich ist auch eine Gelenkwelle die an der Eingangsstufe der Getriebe angreift, jedoch bevorzugt in das Getriebe eingekoppelt ist.

Die Einkopplung in den Antriebsstrang kann dabei in Abhängigkeit von den verwendeten Getrieben und Motoren und deren Anordnung deutlich variieren. Beispielsweise ist eine Verbindung der Ausgangswellen der Motoren über eine Synchronisationswelle möglich. Bevorzugt ist dabei die Synchronisationswelle als Gelenkwelle ausgeführt um Lageverschiebungen der Motoren oder Getriebe auszugleichen. Alternativ kann die Synchronisation auch über die Getriebe eingekoppelt werden, beispielsweise auf die Eingangswellen der Getriebe.

Bevorzugt hat die Synchronisierung der schnell laufenden Getriebestufe eine Kupplung, bevorzugt eine Bogenzahnkupplung, die vorteilhaft geringen Versatz bei hoher Belastung ausgleichen kann. Die Kupplung ist dabei bevorzugt als Sicherheitskupplung ausgeführt, die sich ab einem bestimmten Auslösedrehmoment selbsttätig löst.

Zwei Ausführungsbeispiele der Erfindung werden nachfolgend anhand von Figuren erläutert. Dabei zeigen:
- Figur 1: eine Prinzipdarstellung der erfindungsgemäßen Synchronisierung,
- Figur 2: eine Prinzipdarstellung eines ersten Ausführungsbeispiels mit Einkopplung der Synchronisierung in die Abtriebswelle der Motoren, und
- Figur 3: eine Prinzipdarstellung eines zweiten Ausführungsbeispiels mit Einkopplung der Synchronisierung in die Eingangswelle der Getriebe.

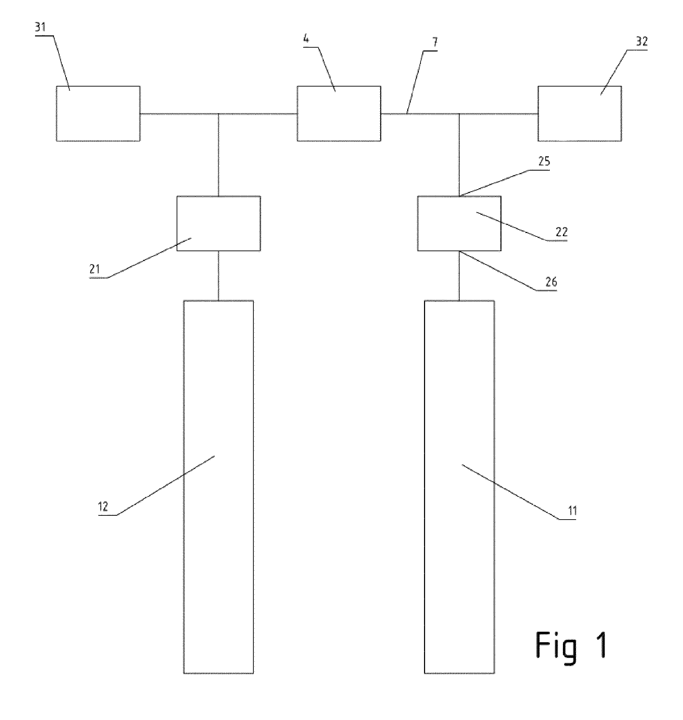

Figur 1 zeigt eine Prinzipskizze eines Walzenbrechers mit zwei Brechwalzen 11 und 12 mit erfindungsgemäßer Synchronisation. Zwei Motoren 31 und 32 treiben über zwei Getriebe 21 und 22 zwei Brechwalzen 11 und 12 an. Die beiden Antriebsstränge sind dabei vor dem Eintritt in das jeweilige Getriebe 21 bzw. 22 über eine Synchronisationswelle 7 synchronisiert. Die Getriebe 21 und 22 haben eine dem Motor zugewandte Getriebeseite mit niedrigem Drehmoment 25 und eine, der Brechwalze 11, 12 zugewandte Getriebeseite mit hohem Drehmoment 26. Entsprechend hat die Getriebeseite mit niedrigem Drehmoment 25 eine höhere Drehzahl und die Getriebeseite mit höherem Drehmoment 26 eine geringere Drehzahl. Die Synchronisationswelle 7 weist zudem eine Kupplung 4 auf. Die Motoren 31 und 32 sind Elektromotoren. Die Kupplung 4 kann zusätzlich als eine Sicherheitskupplung ausgeführt werden und trennt die Kraftübertragung bei einer Blockade eines Antriebsstranges zum Schutz der Anlage.

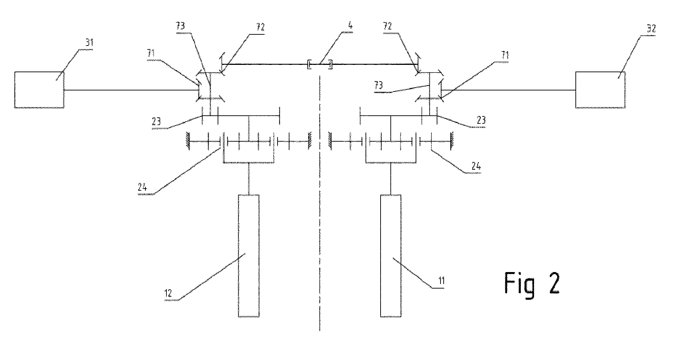

Figur 2 zeigt eine Prinzipdarstellung einer Variante der Einkopplung der Synchronisiation in den Antriebsstrang. Die Getriebe 21 und 22 sind unterteilt in eine erste Stufe in Form eines Stirnradgetriebes 23 und eine zweite Stufe in Form eines Planetengetriebes 24. Dabei wird die Motorwelle über ein Kegelradpaar 71 auf die Getriebeeingangswelle 73 übertragen. Die Einkopplung der Synchronisationswelle 7 erfolgt ebenfalls über ein Kegelradpaar 72 auf die Getriebeeingangswelle 73.

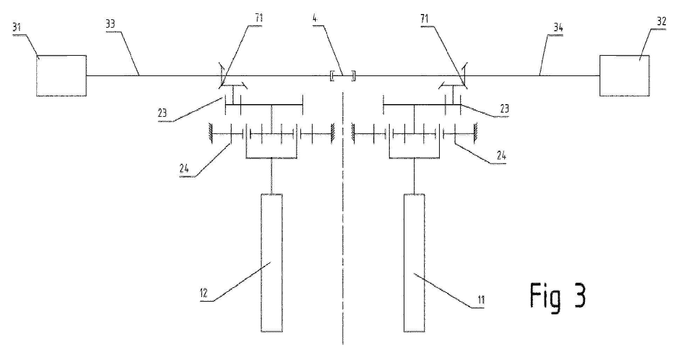

Figur 3 zeigt eine weitere Variante der Einkopplung. Dabei wurden die Ausgangswellen 33 und 34 der Motoren 31 und 32 durch die Synchronisationswelle 7 verbunden. Über Kegelradpaare 71 ist der Antriebsstrang mit den Getrieben 21 und 22 verbunden.

### Bezugszeichenliste:

- 11: Brechwalze
- 12: Brechwalze
- 21: Getriebe 1
- 22: Getriebe 2
- 23: Stirnradgetriebe
- 24: Planetengetriebe
- 25: Getriebeseite niedriges Drehmoment
- 26: Getriebeseite hohes Drehmoment
- 31: Motor 1
- 32: Motor 2
- 33: Ausgangswelle Motor 1
- 34: Ausgangswelle Motor 2
- 4: Kupplung
- 7: Synchronisationswelle
- 71: Kegelradpaar
- 72: Kegelradpaar
- 73: Getriebeeingangswelle

## Patentansprüche

1. Walzenbrecher, aufweisend mindestens zwei Brechwalzen (11, 12) und mindestens zwei Antriebsstränge aufweisend jeweils mindestens ein Getriebe (21, 22) zur Reduktion der Motordrehzahl,
**dadurch gekennzeichnet, dass**
die Synchronisierung der Antriebsstränge auf der Getriebeseite mit geringem Drehmoment (25) erfolgt.

2. Walzenbrecher nach Anspruch 1,
**dadurch gekennzeichnet, dass**
die Synchronisierung über Zahnräder (71) auf der Getriebeeingangsseite erfolgt.

3. Walzenbrecher nach Anspruch 1,
**dadurch gekennzeichnet, dass**
die Synchronisierung mittels einer Verbindung der Ausgangswellen (33, 34) der Motoren erfolgt.

4. Walzenbrecher nach Anspruch 3,
**dadurch gekennzeichnet, dass**
die Synchronisation eine Kupplung (4), insbesondere Bogenzahnkupplung aufweist.

5. Walzenbrecher nach einem der vorangehenden Ansprüche
**dadurch gekennzeichnet, dass**
die Synchronisation eine Synchronisationswelle (7) aufweist und die Synchronisationswelle (7) eine Gelenkwelle ist.
